# EUROPEAN PATENT SPECIFICATION

(11) **EP 0 407 533 B1**
(45) Date of publication and mention of the grant of the patent: **14.04.1993**
(21) Application number: 90901513.3
(22) Date of filing: 15.01.1990
(51) Int. Cl.: B65G 1/127

(54) **COMPACT ENDLESS CONVEYOR-CHAIN FOR VENDING MACHINE**
KOMPAKTE ENDLOSE FÖRDERKETTE FÜR VERKAUFSAUTOMAT
CHAINE SANS FIN COMPACTE, DISTRIBUTEUR AUTOMATIQUE ET STRUCTURE DE TRANSPORT COMPRENANT LADITE CHAINE SANS FIN

(30) Priority: 16.01.1989 BE 8900034
(43) Date of publication of application: 16.01.1991
(73) Proprietor: HOEBERIGS, Jean Marie Mathieu, NL-4524 ER Sluis (NL)
(72) Inventor: Hoeberigs, Johannes, B-8300 Knokke-Heist (BE)
(86) International application number: BE9000001
(87) International publication number: WO9008078

(56) References cited:
- CH-A- 550 718
- DE-A- 2 300 457
- FR-A- 1 253 992
- US-A- 2 382 619

## Description

The invention relates to an endless chain for the conveyance of objects and to an automatic vending machine and conveyance structure comprising such an endless chain.
Such an endless chain comprises several holders which convey the objects. These holders are connected to each other by one or more connection means : Holder one to holder two, holder two to holder three, ..., and the last holder to holder one.

According to the state of the art endless chains are sufficiently known in various application fields. An example is a conveyor-belt which conveys by means of an endless chain objects along various stations where the objects are subjected to subsequent treatments. Another example is a automatic vending machine.
Existing structures, however, show different drawbacks. The most important drawbacks are a loss of place and a lack of flexibility of the movement of one holder with respect to the other one. Another drawback is the rather complicated way in which the different holders are connected to each other and the great number of parts of the combination holder-connection means.

US-A-2,382,619 discloses an endless chain for the conveyance of objects whereby holders are connected to each other by connection means. Joint links are provided as separate elements for the connection of connection means.

It is an object of the invention to avoid the above-mentioned drawbacks and to provide an endless chain which allows a compact configuration, which has a simple design, which consists of a small number of parts and which may be manufactured cheaply and automatically.

According to one aspect, the present invention provides an endless chain for the conveyance of objects, this endless chain comprising holders and connection means whereby the holders are connected to each other by the connection means, characterized in that the combination holder-connection means is carried out in such a way that each holder functions as a joint link to connect adjacent connection means and that, when two holders with their connection means are taken out of the endless chain, one holder can rotate in a completely free way around the other holder, whereby the axes of both holders remain parallel to each other and whereby the distance between the axes remains equal.
Preferably the holders have a cylindrical form.
The connection means preferably has two separate round holes. The internal diameter of the holes is greater than the external diameter of that part of the cylindrical holder where the connection means are to be placed.
The two holes may be made in a rectangular, flat plate. The flat plate with the two holes then serves as connection means. Another embodiment is a link in the form of an eight as connection means.

According to a second aspect, the present invention provides an automatic vending machine which comprises an endless chain as described hereabove.

According to a third aspect, the present invention provides a conveyance structure, characterized in that this conveyance structure comprises an endless chain as described hereabove.

The invention will be explained hereunder with the help of the figures wherein
figure 1, figure 2, figure 3, figure 4 and figure 5 show embodiments of the connection means of the endless chain;
figure 6, figure 7 and figure 8 show embodiments of a holder of the endless chain;
figure 9 and figure 10 show how holders may be connected to each other by connection means;
figure 11 shows a front view of an automatic vending machine;
figure 12 shows a side view of the automatic vending machine of figure 11;
figure 13 shows an axis of the automatic vending machine of figure 11 and and figure 12; and
figure 14 and figure 15 show possible configurations of the endless chain in an automatic vending machine.

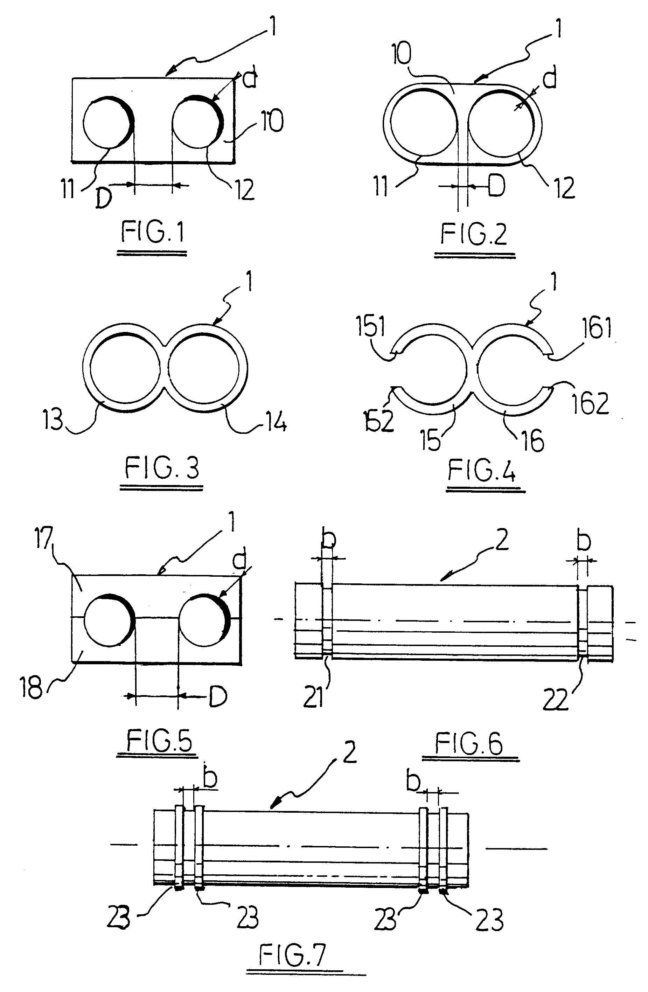

Figure 1 shows a first embodiment of a connection means 1. The connection means 1 consists of a flat, rectangular plate 10 where two round holes 11 and 12 are punched or bored. The distance between the two holes 11 and 12 must be sufficiently large to give the connection means 1 the necessary solidity and to enable the complete free rotation of one holder around its neighbouring holder. In case of figure 1, this means that the distance D must be greater than the distance d between the holes 11 and 12 and the nearest corner of the rectangular plate.

Figure 2 shows a preferable embodiment of the connection means 1 which consists of an oval plate 10 with two holes 11 and 12. Here, the distance D needs only to be greater than the distance d. As a consequence, the embodiment of figure 2 is more compact than the one of figure 1 without losing solidity.

Figure 3 shows another connection means 1 : A unitary link in the form of an eight 13-14. This embodiment is as compact as the one of figure 2, but less solid : under tensile forces which are too great the rings 13 and 14 may undergo more easily a deformation than the oval plate 10 of figure 2.
Figure 4 shows an alternative embodiment for the link of figure 3. The connection means 1 consists of two incomplete rings 15 and 16 which are rigidly connected to each other.
Figure 5 shows a further embodiment of a connection means 1, similar to the embodiment of figure 1. The difference lies in the fact that the flat plate of figure 5 is composed of two parts 17 and 18. The two parts 17 and 18 can be connected to each other.

Figure 6 shows a first embodiment of a cylindrical holder 2. At two places 21 and 22 the external diameter of the holder is smaller than the one of the rest of the holder. The breadth b of these places is at least equal to twice the thickness of connection means 1. These notches 21 and 22 hold the connection means 1 at their places.
Figure 7 shows a second embodiment of a cylindrical holder 2. In this embodiment the external diameter remains equal over the whole length of the holder but four rings 23 are rigidly and unmovably fixed. The distance b between these rings must at least be equal to twice the thickness of connection means 1. The rings 23 also serve to keep connection means 1 at their places.

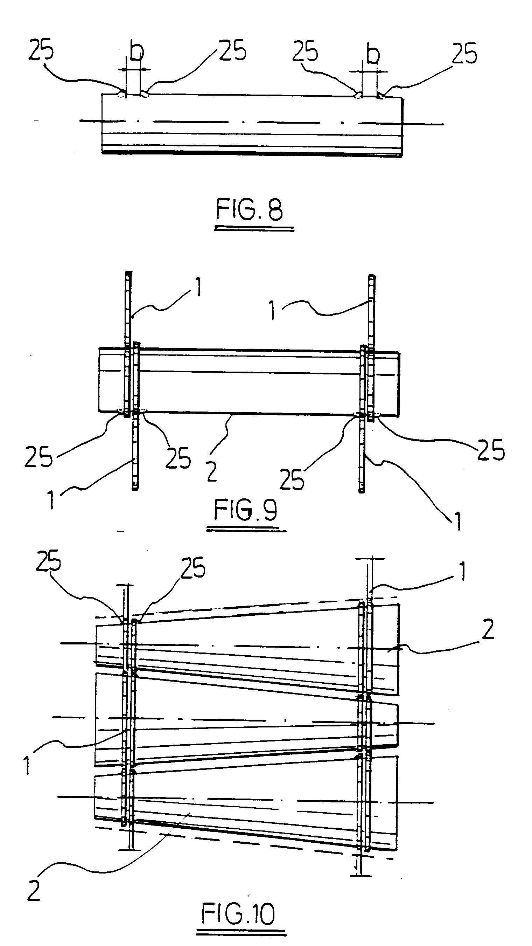

Figure 8 shows a third, simple embodiment of a cylindrical holder 2. The external wall of holder 2 shows two pair of small parts which are directed towards each other and which are protruding. These small parts 25 may be made by punching.

The connection means 1 may be placed to the holders 2 in various ways. The exact way depends on the specific embodiment and on the material both the connection means 1 and the holders 2 are made of. For example, the connection means 1 may be easily pushed over the external wall of a holder 2 if the holder 2 has an embodiment as shown in figure 8. The small protruding parts 25 allow the connection means to be pushed on the holder 2, and once the connection means are at their places, the small parts 25 prevent a removal.
In the case of figure 7, the inner fixed rings 23 may firstly be placed on the exterior wall of the holders, after that the connection means or links 1 may be placed on the holders 2 and only thereafter the outer fixed rings 23.
If the connection means corresponds to the embodiment represented in figure 4, the ends 151, 152, 161 and 162 of the incomplete rings 15 and 16 may be bent open in order to take place on the holder 1 in a more easy way and may be shut afterwards. In the case of figure 4, one must take care for the tensile forces on the connection means not becoming too great in order to prevent the incomplete rings 15 and 16 from opening again. This danger is certainly present in an embodiment where the axes of the holders are horizontally arranged, because the tensile forces are mainly formed by the weight of the holders, connection means and objects which are transported.

If the connection means consists of two connectable parts as shown in figure 5 then assembly of the endless chain does not pose a problem.

Figure 9 shows how the holders are connected by the connection means. Holder 2 is connected to the previous holder (not shown) by means of two links 1 which have the form of an eight and to the following holder (not shown) by means of two other links which have the form of an eight. The extruding parts 25 hold the links 1 at their place. According to the present invention, the holder 2 functions as a joint link and only a minimum of space gets lost between the holders. Due to the complete flexibility of one holder with respect to the other holder the curve of the endless chain can be so designed that a maximum number of holders may take place in the reserved space. Moreover, the inner space of the holder 2 can be reserved completely for the objects to be conveyed. However, nothing prevents from using , besides the objects to be conveyed, means inside the holder 2 to keep the objects more easily at their place. A further advantage of the invention is that the endless chain substantially consists of only two different, very simple parts : the connection means 1 and the holder 2. Both can be easily manufactured in an automatic and cheap way.

The material out of which the connection means 1 as well as the holder 2 are made, depends on the application. For example, for the conveyance of articles of food which are not packed up the material must be such that the articles of food do not go bad. Synthetic material or glass may be appropriate. If the endless chain is used in an automatic vending machine which is refrigerated, the used material must not slow down the cooking and metal may be appropriate.

Another requirement for the used material is that the holders 2 must slide rotatingly in the connection means 1 without difficulty. Links 1 in the form of an eight which are made of nylon and holders 2 of metal or synthetic material form a suitable embodiment.

Figure 10 shows that the holders do not necessarily need to be cylindrical, but that conical holders may also be connected to each other according to the invention. In this case the two holes of the connection means 1 do not have the same size. Such an embodiment may be used, e.g., in a conveyance system where some objects are to be taken at one side and other objects at the other side.

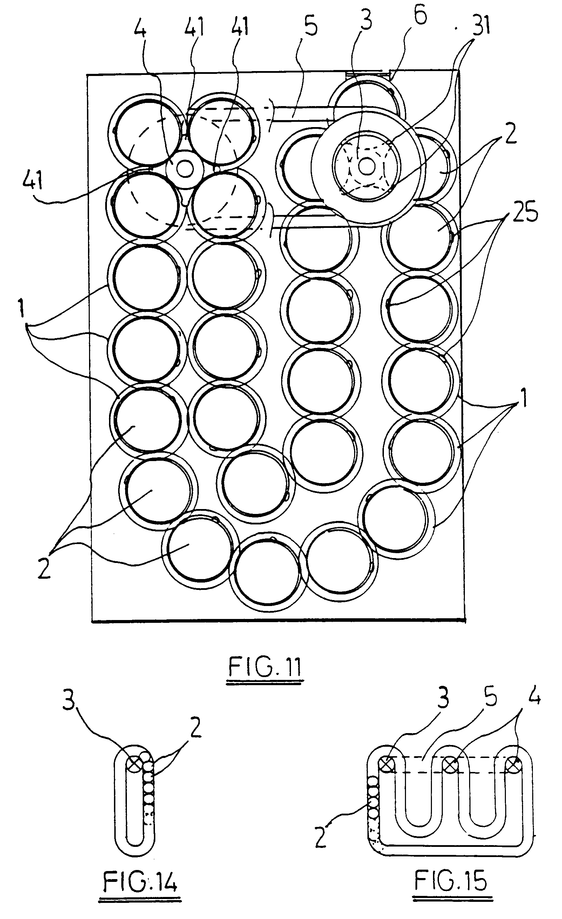

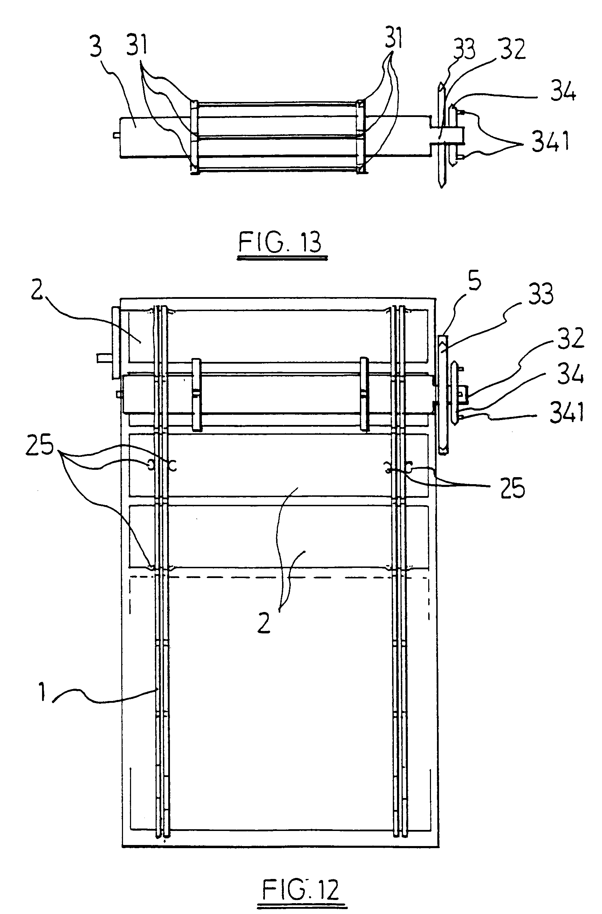

Figure 11 shows a front side of automatic vending machine comprising an endless chain according to the present invention and figure 12 shows a side view of the same automatic vending machine. The holders 2 are connected to each other by means of the links 1 in the form of an eight as shown in figure 9 and form the endless chain. The endless chain itself is hung over two axes 3 and 4. The one axis is driven, for example by means of an electrical motor, and drives by means of a chain 5 the other axis 4.
The axes 3 and 4 have four teeth 31, 41 which are rigidly connected to the axes and which fit exactly between the holders 2. According to the inventor, two such teeth per axis are already sufficient, providing they form an angle of 180 degrees.

Figure 13 shows a side view of the driven axis 3. The figure shows one elongated toothing 31; however, different teeth which are in phase with each other and which are spread over the length of the axis are also possible. It is obvious that the places where the toothing is on the axes 3 and 4 must not coincide with the places where the connection means 1 are placed on the holders 2.
At the extremity 32 of the axis 3 a gear 33 is rigidly connected thereto and drives the chain 5. At this extremity 32 of the axis 3 a driving point 34 is also rigidly connected. The external driving, by means of an electrical motor (not on the figure), acts upon this driving point. One way of realizing this is by means of four symmetrically arranged pins 341 which are rigidly connected to the driving point. With each impuls (e.g. just after throwing a coin in the automatic vending machine) the driving point rotates over an angle of 90°. In this way exactly one holder comes each time in front of a window 6.

Figure 11 shows one possible embodiment of the endless chain, namely with two horizontal axes at an equal height. Figure 15 shows an embodiment with three horizontal axes, axis 3 of which is externally driven and axes 4 are driven by axis 3 by means of the chains 5. Figure 14 shows an embodiment with one horizontal axis.

It is clear that the endless chain according to the present invention is not limited to embodiments where the axes are arranged horizontally as in an automatic vending machine, but that embodiments with vertical axes are also possible such as in a conveyance structure of an assembly line. In order to provide the necessary tension in the endless chain there are as many vertical axes as there are direction changes in the endless chain. The different holders 2 rest on the ground or the floor which may cause too great a friction. This friction can be diminished by providing the under side of the holders with one or more ball bearings.

The invention is not limited to one single application, but may be used in various surroundings and for various goals. The invention may e.g. be used in an automatic vending machine for articles of food such as ices, loaves of bread, sausages, beverage in bottles or in tin plates, and also a in an automatic vending machine for newspapers, condoms or woman stockings: As a conveyance system the invention may be used to bridge one or more floors such as in some restaurants or companies and further in all assembly lines. The form, the size and the material of the holder 2 all obviously depend on the objects to convey. The strength, the form and the size of the connection means must then be adapted.

## Claims

1. An endless chain for the conveyance of objects, said endless chain comprising holders (2) and connection means (1) whereby the holders are connected to each other by the connection means,
characterized in that
the combination holder-connection means (1,2) is carried out in such a way that each holder (2) functions as a joint link to connect adjacent connection means (1) and that, when two holders (2) with their connection means (1) are taken out of the endless chain, one holder (2) can rotate in a completely free way around the other holder (2), whereby the axes of both holders remain parallel to each other and whereby the distance between the axes of both holders remains equal.

2. An endless chain according to claim 1 characterized in that the holder (2) has a cylindrical form.

3. An endless chain according to claim 2 characterized in that each connection means (1) has two separate round holes (11,12), whereby the internal diameter of the holes is greater than the external diameter of that part of the cylindrical holder (2) where the connection means (1) are to be placed.

4. An endless chain according to claim 3 characterized in that the connection means (1) is a link in the form of an eight.

5. An automatic vending machine characterized in that said automatic vending machine comprises an endless chain according to one of the preceding claims.

6. A conveyance structure characterized in that said conveyance structure comprises an endless chain according to one of the claims 1 to 4.

## Patentansprüche

1. Endlose Kette für die Beförderung von Objekte, genannte endlose Kette umfassend Halter (2) und Verbindungsmittel (1) wobei die Halter miteinander durch die Verbindungsmittel verbunden sind, dadurch gekennzeichnet daß
die Kombination Halter-Verbindungsmittel (1,2) derart ist ausgeführt daß jeder Halter (2) funktioniert wie ein Gelenk un die nahe Verbindungsmittel (1) zu verbinden und daß, wann man zwei Halter (2) zusammen mit ihren Verbundingsmitteln (1) aus der endlose Kette nimmt, ein Halter (2) vollständig frei kann rotieren um dem anderen Halter (2), wobei die Achse beider Halter parallel zu einander bleiben und wobei der Abstand zwischen die Achse beider Halter gleich bleiben.

2. Endlose Kette nach Anspruch 1 dadurch gekennzeichnet daß der Halter (2) eine zylindrische From hat.

3. Endlose Kette nach Anspruch 2 dadurch gekennzeichnet daß jedes Verbindungsmittel (1) zwei einzelne runde Löcher (11,12) hat, wobei der innere Durchmesser der Löcher größer ist als der äußere Durchmesser dieses Teils des zylindrischen Halters (2) wo die Verbindungsmittel (1) montiert werden müssen.

4. Endlose Kette nach Anspruch 3 dadurch gekennzeichnet daß das Verbindungsmittel (1) eine Verbindung in der Form einer Acht hat.

5. Verkaufsautomat dadurch gekennzeichnet daß genannter Verkaufsautomat eine endlose Kette nach einem der vorhergehenden Ansprüche umfaßt.

6. Fördervorrichtung dadurch gekennzeichnet daß genannte Fördervorrichtung eine endlose Kette nach einem der Ansprüche 1 bis 4 umfaßt.

## Revendications

1. Chaine sans fin pour le transport des objets, ladite chaine sans fin comprenant des porteurs (2) et des moyens d'assemblage (1), les porteurs étant liés l'un à l'autre par les moyens d'assemblage,
caractérisée en ce que
la combinaison porteur-moyen d'assemblage (1,2) est exécutée d'une manière que chaque porteur (2) fonctionne comme une articulation pour lier des moyens d'assemblage (1) voisins et que, quand deux porteurs (2) avec leurs moyens d'assemblage (1) sont enlevés de la chaine sans fin, une porteur (2) peut tourner autour de l'autre porteur (2) d'une manière complètement libre, les axes des deux porteurs restant parallèles l'un à l'autre et la distance entre les axes des deux porteurs restant égale.

2. Chaine sans fin selon la revendication 1 caractérisée en ce que le porteur (2) possède une forme cylindrique.

3. Chaine sans fin selon la revendication 2 caractérisée en ce que chaque moyen d'assemblage (1) possède deux troux ronds et distincts (11, 12), le diamètre interne des trous étant supérieur au diamètre externe de cette partie du porteur cylindrique où il faut placer les moyens d'assemblage (1).

4. Chaine sans fin selon la revendication 3 caractérisée en ce que le moyen d'assemblage (1) est une jonction qui a la forme d'une huit.

5. Distributeur automatique caractérisé en ce que ledit distributeur comprend une chaine sans fin selon une des revendications précédentes.

6. Structure de transport caractérisée en ce que ladite structure de transport comprend une chaine sans fin selon une des revendications 1 à 4.
